(19) Europäisches Patentamt
European Patent Office
Office européen des brevets

(11) **EP 3 483 898 A1**

(12) **EUROPEAN PATENT APPLICATION**
published in accordance with Art. 153(4) EPC

(43) Date of publication:
**15.05.2019 Bulletin 2019/20**

(21) Application number: **17824135.2**

(22) Date of filing: **29.06.2017**

(51) Int Cl.:
*H01B 5/14* (2006.01)  *B32B 7/02* (2019.01)
*B32B 15/08* (2006.01)  *G06F 3/041* (2006.01)
*G06F 3/044* (2006.01)

(86) International application number:
**PCT/JP2017/024004**

(87) International publication number:
**WO 2018/008530 (11.01.2018 Gazette 2018/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.07.2016  JP 2016136273**

(71) Applicant: **Asahi Kasei Kabushiki Kaisha Tokyo 1000006 (JP)**

(72) Inventors:
• **MATSUBARA, Shinya**
  **Tokyo 101-8101 (JP)**
• **ABE, Masayuki**
  **Tokyo 101-8101 (JP)**
• **ONO, Katsumi**
  **Tokyo 101-8101 (JP)**
• **IBA, Ayato**
  **Tokyo 101-8101 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **CONDUCTIVE FILM, ELECTRONIC PAPER, TOUCH PANEL, AND FLAT PANEL DISPLAY**

(57) An electrically conductive film having a transparent base material and an electrically conductive part including a metal thin wire pattern disposed on the transparent base material, in which the metal thin wire pattern is constituted of a metal thin wire, and when the metal thin wire is projected onto a plane, a projection width that is the longest among projection widths of the metal thin wire is less than the lower limit wavelength of visible light.

Fig. 1

EP 3 483 898 A1

**Description**

Technical Field

The present invention relates to an electrically conductive film, as well as an electronic paper, a touch panel, and a flat panel display using the same.

Background Art

Up to now, transparent, electrically conductive films using indium tin oxide (ITO) have been used for devices such as an electronic paper, a touch panel, and a flat panel display. However, the electrically conductive films using ITO have problems from the viewpoint of cost reduction and resource saving.

Thus, various studies on the electrically conductive film that replaces ITO have been conducted. For example, Non-Patent Literature 1 discloses a technique in which a metal thin wire the minimum wire width of which is 0.8 $\mu$m is prepared on a plastic substrate by printing without using a vacuum technique. It has been described that electrically conductive films obtained by the technique are more excellent in light transmittance and sheet resistance than other electrically conductive films obtained using ITO, a silver nanowire, graphene, or the like.

Citation List

Non-Patent Literature

Non-Patent Literature 1
Nature Communications 7, Article number: 11402

Summary of Invention

Technical Problem

However, as shown in Figure 8a in Non-Patent Literature 1, there exist trade-off problems in that in any of the techniques for preparing an electrically conductive film, when the sheet resistance is intended to be lowered, the light transmittance is extremely lowered as well. This is attributable to the fact that when the sheet resistance is intended to be lowered from the viewpoint of reducing power loss, the wire width has to be made thick, and the wire thickness has to be made thick; however, when the wire width is made thick, and the wire thickness is made thick, the light transmission properties are lost accordingly. Therefore, it has been impossible to prepare an electrically conductive film having a low sheet resistance and a high light transmittance by conventional techniques.

In addition, a metal thin wire cannot be densely disposed in an electrically conductive film using a metal thin wire as described in Non-Patent Literature 1 from the viewpoint of securing light transmittance. In an electronic device using such an electrically conductive film, an element has to be disposed at a position of the metal thin wire of the electrically conductive film. Moreover, since the metal thin wire cannot be densely disposed, the non-uniformity of an electrical field occurs such that the electrical field is strong near the metal thin wire, and the electrical field is weak at a position away from the metal thin wire. Therefore, the problems are that the precision of a touch panel or an image cannot be enhanced because the metal thin wire density (pitch) of the electrically conductive film becomes a bottleneck. That is, there exist the trade-off problems in that when the light transmittance is intended to be secured, there is no other choice but to reduce the metal thin wire density in an electrically conductive film using a metal thin wire as described in Non-Patent Literature 1.

If a technique that solves the trade-off problems between the sheet resistance and the light transmittance is developed, an electrically conductive film having reduced power loss and having excellent light transmission properties can be realized, and in addition, if a technique that solves the trade-off problems between the light transmittance and the metal thin wire density is developed, an electronic device of higher precision than the conventional electronic devices can be given, and an electrically conductive film also having excellent light transmission properties can be realized.

The present invention has been completed in consideration of the conventional problems, and an object of the present invention is to provide an electrically conductive film having a low sheet resistance and a high visible light transmittance and capable of reducing a metal thin wire pitch while keeping the visible light transmittance, as well as an electronic paper, a touch panel, and a flat panel display using the electrically conductive film.

Solution to Problem

The present inventors have conducted diligent studies to solve the problems. As a result, the present inventors have found that by making a wire width of a metal thin wire less than the lower limit wavelength of visible light in an electrically conductive film having a metal thin wire, optical behavior that is different from that in a case where the wire width of the metal thin wire is larger than the wavelengths of visible light is exhibited, so that the trade-off problems between the sheet resistance and the visible light transmittance can be solved, thereby completed the present invention.
That is, the present invention is as follows.

[1] An electrically conductive film comprising:

    a transparent base material; and
    an electrically conductive part including a metal thin wire pattern disposed on the transparent base material, wherein:

        the metal thin wire pattern is constituted of a metal thin wire; and
        when the metal thin wire is projected onto a plane, a projection width that is the longest among projection widths of the metal thin wire is less than a lower limit wavelength of visible light.

[2] The electrically conductive film according to [1], wherein
the projection width of the metal thin wire is less than 360 nm.
[3] The electrically conductive film according to [1] or [2], wherein
when a wire width of the metal thin wire, the wire width obtained by projecting the metal thin wire onto a surface of the transparent base material from a side of a face of the transparent base material, the face having the metal thin wire pattern disposed thereon, is defined as a front projection wire width,
an aspect ratio represented by a height of the metal thin wire to the front projection wire width of the metal thin wire is 0.1 to 2.
[4] The electrically conductive film according to any one of [1] to [3], wherein
a visible light transmittance of the electrically conductive film is equal to or larger than an opening ratio of the metal thin wire pattern.
[5] The electrically conductive film according to any one of [1] to [4], wherein
a pitch of the metal thin wire pattern is larger than the sum of an upper limit wavelength of visible light and a lower limit wavelength of visible light.
[6] The electrically conductive film according to any one of [1] to [5], wherein
an opening ratio of the metal thin wire pattern is 40 to 99 %.
[7] The electrically conductive film according to any one of [1] to [6], wherein
a visible light transmittance of the electrically conductive film is 80 to 100 %.
[8] The electrically conductive film according to any one of [1] to [7], wherein
a sheet resistance of the electrically conductive film is 0.1 to 1000 Ω/sq.
[9] The electrically conductive film according to any one of [1] to [8], wherein
the metal thin wire pattern is a mesh pattern.
[10] The electrically conductive film according to any one of [1] to [8], wherein
the metal thin wire pattern is a line pattern.
[11] The electrically conductive film according to any one of [1] to [10], wherein
the metal thin wire comprises an electrically conductive component and a non-electrically conductive component.
[12] An electronic paper comprising:
the electrically conductive film according to any one of [1] to [11].
[13] A touch panel comprising:
the electrically conductive film according to any one of [1] to [11].
[14] A flat panel display comprising:
the electrically conductive film according to any one of [1] to [11].

Advantageous Effects of Invention

According to the present invention, an electrically conductive film having a low sheet resistance and a high visible light transmittance and capable of reducing a metal thin wire pitch while keeping the visible light transmittance, as well as an electronic paper, a touch panel, and a flat panel display using the electrically conductive film can be provided.

Brief Description of Drawings

Figure 1 shows a top view illustrating one aspect of an electrically conductive film according to the present embodiment, the electrically conductive film having a mesh pattern.

Figure 2 shows a top view illustrating another aspect of an electrically conductive film according to the present embodiment, the electrically conductive film having a mesh pattern.

Figure 3 shows a top view illustrating one aspect of an electrically conductive film according to the present embodiment, the electrically conductive film having a line pattern.

Figure 4 shows a top view illustrating another aspect of an electrically conductive film according to the present embodiment, the electrically conductive film having a line pattern.

Figure 5 shows a sectional view of a metal thin wire for describing the longest projection width W0 of the metal thin wire.

Figure 6 shows a partial sectional view of the electrically conductive film taken along III-III' in Figure 1.

Figure 7 shows a top view of a metal thin wire pattern for describing a relationship between an opening ratio and a pitch of an electrically conductive film according to the present embodiment, the electrically conductive film having a mesh pattern.

Figure 8 shows a top view of a metal thin wire pattern for describing a relationship between an opening ratio and a pitch of an electrically conductive film according to the present embodiment, the electrically conductive film having a line pattern.

Figure 9 shows a top view illustrating one aspect of an electronic paper provided with an electrically conductive film according to the present embodiment.

Figure 10 shows a partial sectional view of the electronic paper according to the present embodiment taken along V-V'.

Figure 11 shows a top view illustrating one aspect of an electronic paper provided with a conventional, electrically conductive film.

Figure 12 shows a perspective view illustrating one aspect of a touch panel provided with an electrically conductive film according to the present embodiment.

Figure 13 shows a perspective view illustrating another aspect of a touch panel provided with an electrically conductive film according to the present embodiment.

Description of Embodiment

Hereinafter, an embodiment according to the present invention (hereinafter, referred to as "present embodiment") will be described in detail, but the present invention is not limited to this, and various modifications can be made within a range not deviating from the scope of the present invention.

[Electrically Conductive Film]

An electrically conductive film according to the present embodiment comprises a transparent base material and an electrically conductive part including a metal thin wire pattern disposed on the transparent base material, wherein the metal thin wire pattern is constituted of a metal thin wire, and when the metal thin wire is projected onto a plane, a projection width that is the longest among projection widths of the metal thin wire (hereinafter, also referred to as "longest projection width W0") is less than the lower limit wavelength of visible light.

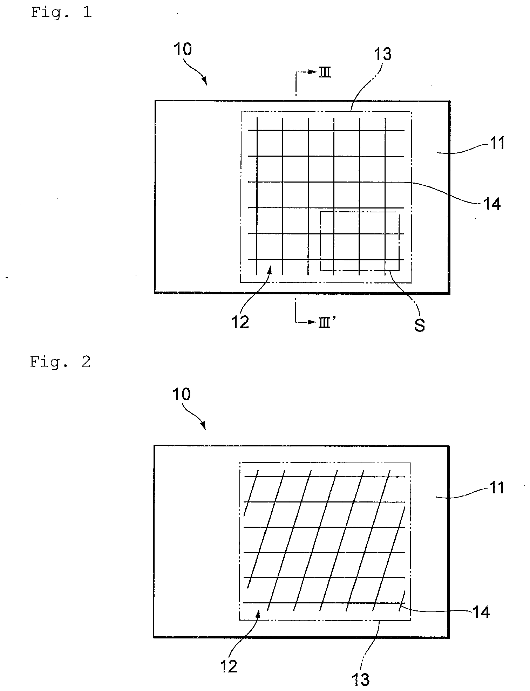

Figure 1 shows as one aspect of the electrically conductive film according to the present embodiment a top view of an electrically conductive film in which the metal thin wire pattern is a mesh pattern. The electrically conductive film 10 according to the present embodiment comprises on the base material 11 the conductive part 13 including the metal thin wire pattern 12.

In addition to the electrically conductive part 13, a lead-out electrode (not illustrated in the figure) for being connected to a controller or the like may be formed on the transparent base material 11 according to the use of the electrically conductive film 10. It is to be noted that the transparent base material 11 can have the electrically conductive part 13 on one face or both faces thereof and may have a plurality of electrically conductive parts 13 on one face thereof. The electrically conductive part 13 includes the metal thin wire pattern 12 constituted so as to allow an electric current to pass or so as to be charged (electrified). When the electrically conductive film 10 according to the present embodiment is incorporated into an electronic device, the electrically conductive part 13 functions as a transparent electrode for a screen part of an electronic paper, a touch panel, a flat panel display, or the like.

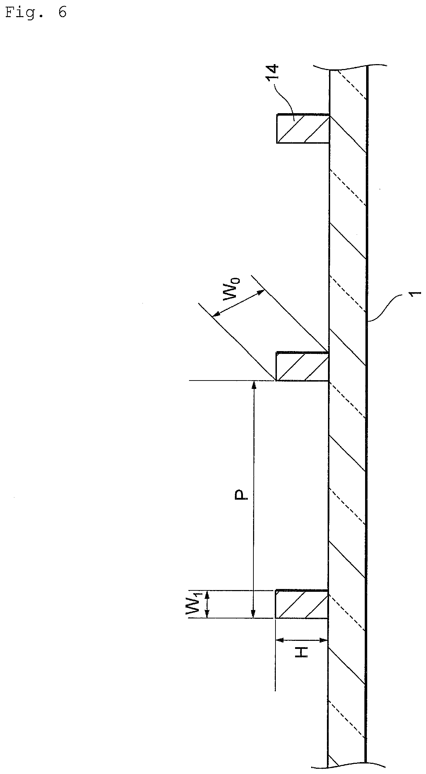

The metal thin wire pattern 12 is constituted of a metal thin wire 14 having a longest projection width W0 of less than the lower limit wavelength of visible light. Figure 6 shows a partial sectional view of the electrically conductive film taken along III-III' in Figure 1. Conventionally, the wire width of the metal thin wire is sufficiently longer than the upper limit wavelength of visible light, and therefore visible light falling on the metal thin wire reflects, so that the light is shielded. In addition, a light wave has extremely smaller wavelength than a sound wave and the like and therefore has a small diffraction angle when a wave diffracts behind an obstacle. Thus, in a case where the distance between adjacent opening parts is long (the wire width of the metal thin wire is sufficiently longer than the upper limit wavelength of visible light), light rays from adjacent opening parts never interfere with each other. Accordingly, there is a limit to enhancement of transparency of conventional, electrically conductive films having a metal thin wire pattern, and a human can visually recognize the metal thin wire.

In contrast, in the present embodiment, the projection width that is the longest when a metal thin wire is projected to a plane (longest projection width W0) is made less than the lower limit of visible light. In a case where the longest projection width W0 is smaller than the wavelengths of visible light, light rays from adjacent opening parts interfere with each other and can be joined even though the light waves have a small diffraction angle. In addition, the smaller the longest projection width W0 is, the smaller the optical path difference is, and therefore a phase difference is hard to occur, and attenuation of the light rays with each other through interference is less influential. Accordingly, in a case where the longest projection width W0 of the metal thin wire is shorter than the wavelengths of the visible light, it is hard for a human to visually recognize the thin wire, resulting in enhancement of transmission properties. In this way, the phenomenon that occurs is totally different depending on whether the longest projection width W0 of the metal thin wire is shorter or longer than the wavelengths of visible light.

Therefore, in conventional metal thin wire patterns having a longest projection width W0 longer than the upper limit wavelength of visible light, the light transmittance is the same when comparison is made between, for example, a case where the longest projection width W0 is 100 $\mu$m, and the opening ratio is 90% (a state in which a metal thin wire pattern covers 10% of an electrically conductive film) and a case where the longest projection width W0 is 200 $\mu$m, and the opening ratio is 90%, but in contrast, in the present embodiment, a result is that the light transmittance is higher, for example, in a case where the longest projection width W0 is 100 nm, and the opening ratio is 90% (a state in which a metal thin wire pattern covers 10% of an electrically conductive film) than in a case where the longest projection width W0 is 100 $\mu$m, and the opening ratio is 90% (a state in which a metal thin wire pattern covers 10% of an electrically conductive film).

When comparison is made between a case where an electrically conductive film having an opening ratio of 90% (a state in which a metal thin wire pattern covers 10% of the electrically conductive film) is constituted using a metal thin wire having a longest projection width W0 of 100 $\mu$m and a case where an electrically conductive film having an opening ratio of 90% (a state in which a metal thin wire pattern covers 10% of the electrically conductive film) is constituted using a metal thin wire having a longest projection width W0 of 100 nm, a larger number of metal thin wires (a pitch between wires is made shorter by 1/1000) is disposed in the latter case. Therefore, in an electronic device using an electrically conductive film using a metal thin wire, an element has to be disposed at a position of the metal thin wire in the electrically conductive film, but the electrically conductive film according to the present embodiment enables enhancement of precision of a touch panel or an image without paying attention to the metal thin wire density (pitch). In addition, the metal thin wire can be densely disposed in the present embodiment, and therefore the problem of non-uniformity of the electrical field that the electrical field is strong near the metal thin wire, and the electrical field is weak at a position away from the metal thin wire can be solved.

[Transparent Base Material]

The term "transparent" in the transparent base material means that the visible light transmittance is preferably 80% or more, more preferably 90% or more, and still more preferably 95% or more. The visible light transmittance herein can be measured in accordance with JIS R 3106:1998.

The material for the transparent base material is not particularly limited, and examples thereof include: transparent inorganic base materials such as glass; and transparent organic base materials such as acrylic acid esters, methacrylic acid esters, polyethylene terephthalate, polybutylene terephthalate, polyethylene naphthalate, polycarbonate, polyarylate, polyvinyl chloride, polyethylene, polypropylene, polystyrene, nylon, aromatic polyamide, polyether ether ketone, polysulfone, polyethersulfone, polyimide, and polyetherimide. Among these, polyethylene terephthalate is preferable from the viewpoint of cost. In addition, from the viewpoint of heat resistance, polyimide is preferable. Further, from the viewpoint of adhesiveness with metal wiring, polyethylene terephthalate and polyethylene naphthalate are preferable.

The transparent base material may be a transparent base material containing one material or may be a transparent base material in which two or more materials are laminated. In addition, in the case of the transparent base material in which two or more materials are laminated, the transparent base material may be a transparent base material in which organic base materials or inorganic base materials are laminated, or a transparent base material in which an organic base material(s) and an inorganic base material(s) are laminated.

The thickness of the transparent base material is preferably 5 to 500 $\mu$m, more preferably 10 to 100 $\mu$m.

[Electrically Conductive Part]

The electrically conductive part is a metal thin wire pattern disposed on the transparent base material. The metal thin wire pattern is constituted of a metal thin wire having a longest projection width W0 of less than the lower limit wavelength of visible light. The material for the metal thin wire is not particularly limited, and examples thereof include gold, silver, copper, and aluminum. Among these, copper is preferable from the viewpoint of cost and electrical conductivity.

The metal thin wire may further contain a non-electrically conductive component in addition to at least one electrically conductive component selected from the group consisting of gold, silver, copper, and aluminum described above. The electrically conductive component herein contains only a metal or metals. In addition, the non-electrically conductive component is not particularly limited, and examples thereof include metal oxides and organic compounds. It is to be noted that each of these non-electrically conductive components is a component derived from a component contained in an ink, which will be described later, and examples thereof include metal oxides and organic compounds which are among the components contained in the ink and which are left in a metal thin wire after calcination. The proportion of the electrically conductive component contained is preferably 80% by mass or more, more preferably 90% by mass or more, and still more preferably 95% by mass or more. The upper limit of the proportion of the electrically conductive component contained is 100% by mass though not particularly limited thereto. In addition, the proportion of the non-electrically conductive component contained is preferably 20% by mass or less, more preferably 10% by mass or less, and still more preferably 5% by mass or less. The lower limit of the proportion of the non-electrically conductive component contained is 0% by mass though not particularly limited thereto.

(Metal Thin Wire Pattern)

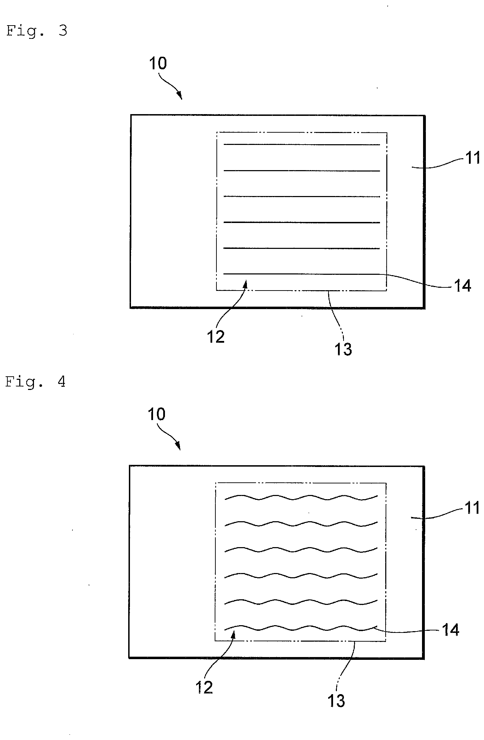

The metal thin wire pattern can be designed according to the intended use of an electronic device and is not particularly limited, and examples thereof include a mesh pattern formed so that a plurality of metal thin wires are crossed in the form of a mesh (Figures 1 and 2) and a line pattern in which a plurality of approximately parallel metal thin wires are formed (Figures 3 and 4). In addition, the metal thin wire pattern may be a metal thin wire pattern obtained by combining a mesh pattern and a line pattern. The mesh in the mesh pattern may be a square or a rectangle as shown in Figure 1 or a polygon such as a rhombus as shown in Figure 2. In addition, the metal thin wire that constitutes a line pattern may be a straight line as shown in Figure 3 or a curved line as shown in Figure 4. Further, with respect to the metal thin wire that constitutes a mesh pattern, the metal thin wire can also be made into a curved line.

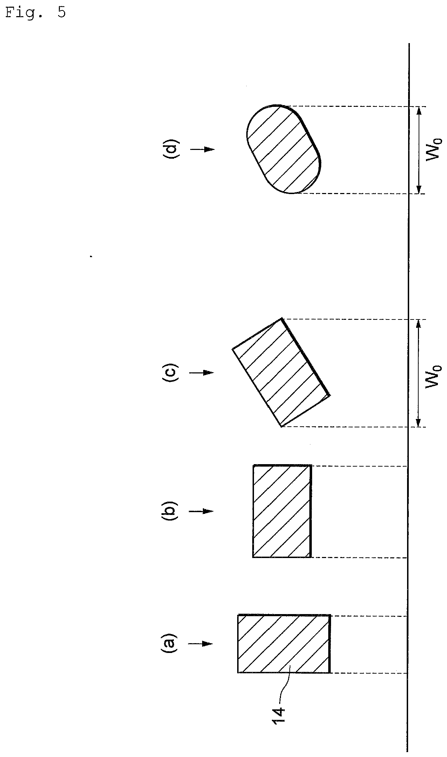

As described above, in the present embodiment, the wire width of the metal thin wire is determined from the viewpoint of diffraction and interference of visible light, and from this viewpoint, the projection width that is the longest when the metal thin wire is projected onto a plane (longest projection width W0) is made less than the lower limit wavelength of visible light. Figure 5 shows a sectional view of a metal thin wire for describing the longest projection width W0 of the metal thin wire. The "longest projection width W0" refers to a projection width that is the widest when the metal thin wire is rotated in the longitudinal direction while projecting the metal thin wire on a plane. Take Figure 5 as an example, then the projection width becomes the widest in the case (c) where the metal thin wire having a rectangular section is projected so that a diagonal line of the rectangle becomes in parallel with the plane of projection by rotating the metal thin wire a little around the longitudinal direction as an axis when comparison is made with the case (a) where the metal thin wire is projected from a lengthwise direction and the case (b) where the metal thin wire is projected from a width direction. Accordingly, the longest projection width W0 in the metal thin wire having a rectangular section is a projection width obtained in the case (c). In addition, the longest projection width W0 in a case where the metal thin wire has a section other than a rectangle can also be obtained in the same manner. For example, in a metal thin wire having a section of an approximately elliptical shape, the longest projection width W0 can also be obtained by rotating the metal thin wire in the longitudinal direction while projecting the metal thin wire on a plane.

In addition, the front projection wire width W1, the height H, and the pitch P of the metal thin wire pattern are defined as shown in Figure 6. The pitch P is the sum of the front projection wire width W1 and the distance between the metal thin wires. It is to be noted that the "front projection wire width W1" refers to a wire width of the metal thin wire 14 when the metal thin wire 14 is projected onto the surface of the transparent base material 11 from the side of a face of the transparent base material 11, the face having the metal thin wire pattern 12 disposed thereon. Take Figure 6 as an example, then in the metal thin wire 14 having a rectangular section, the width of a face of the metal thin wire 14, the face being in contact with the transparent base material 11, is the front projection wire width W1.

(Longest Projection Width W0)

The projection width of the metal thin wire, which is the longest among projection widths of the metal thin wire when the metal thin wire is projected onto a plane (longest projection width W0), is less than the lower limit wavelength of visible light, preferably less than 360 nm, more preferably 325 nm or less, still more preferably 300 nm or less, even still more preferably 250 nm or less, and particularly preferably 200 nm or less. The thinner the longest projection width W0 is, the harder it is to visually recognize the thin wire because of a diffraction effect and the more the transmission properties are improved. It is to be noted that the lower limit of the longest projection width W0 of the metal thin wire is not particularly limited, but is preferably 10 nm or more, more preferably 25 nm or more, and still more preferably 50 nm or more. There is a tendency that when the lower limit of the longest projection width W0 of the metal thin wire is within the above-described range, the production yield is thereby more improved and breaking of the metal thin wire is more suppressed. In addition, when the opening ratio is assumed to be the same, the thinner the wire width of the metal thin wire is, the more the number of the metal thin wires can be increased. Thereby, the electrical field distribution of the electrically conductive film becomes more uniform, and a higher-resolution device can be prepared. In addition, even if breaking occurs in some metal thin wires, other metal thin wires can compensate for an influence due to the breaking.

(Aspect Ratio)

The aspect ratio represented by the height H of the metal thin wire to the front projection wire width W1 of the metal thin wire is preferably 0.1 to 2, more preferably 0.2 to 1.5, and still more preferably 0.4 to 1. There is a tendency that the sheet resistance can be more improved without lowering the visible light transmittance by increasing the aspect ratio while making the longest projection width W0 of the metal thin wire less than the lower limit wavelength of visible light.

(Pitch)

The pitch P of the metal thin wire pattern is preferably larger than the sum of the upper limit wavelength of visible light and the lower limit wavelength of visible light. Specifically, the pitch P of the metal thin wire pattern is 1.2 $\mu$m or more, more preferably 1.5 $\mu$m or more, and still more preferably 2 $\mu$m or more. There is a tendency that when the pitch P of the metal thin wire pattern is 1.2 $\mu$m or more, namely when the distance between the metal thin wires is equal to or larger than the upper limit wavelength of visible light, visible light reflection by the metal thin wire can be thereby more suppressed to improve the transparency more. It is noted herein that the "upper limit wavelength of visible light" refers to 830 nm, the "lower limit wavelength of visible light" refers to 360 nm, and the "sum of the upper limit wavelength of visible light and the lower limit wavelength of visible light" refers to 1.19 $\mu$m.

In addition, the pitch P of the metal thin wire is preferably 72 $\mu$m or less, more preferably 50 $\mu$m or less, and still more preferably 25 $\mu$m or less. When the pitch P of the metal thin wire is 72 $\mu$m or less, the electrical field distribution of the electrically conductive film becomes thereby more uniform and a higher-resolution device can be prepared. It is to be noted that in a case where the shape of the metal thin wire pattern is a mesh pattern, an opening ratio of 99% can be achieved by making the pitch of the metal thin wire pattern including a metal thin wire having a wire width of 360 nm 71.8 $\mu$m.

It is to be noted that the front projection wire width W1, the aspect ratio, and the pitch of the metal thin wire pattern can be checked by observing a section of the electrically conductive film with an electron microscope or the like. In addition, the pitch and the opening ratio have a relational formula, which will be described later, and therefore when the one is found, the other can be calculated. Furthermore, examples of the method of adjusting the wire width, the aspect ratio, and the pitch of the metal thin wire pattern in a desired range include: a method of adjusting grooves of a plate for use in the method for producing an electrically conductive film, which will be described later; making the average particle diameter of a metal particle in an ink for use in the method for producing an electrically conductive film several nm, and other methods.

(Opening Ratio)

From the viewpoint of improving the transparency of the electrically conductive film, the opening ratio of the metal thin wire pattern is preferably 40% or more, more preferably 50% or more, still more preferably 60% or more, even still more preferably 70% or more, further even still more preferably 80% or more, and particularly preferably 90% or more. In addition, from the viewpoint of electrical conductivity of the electrically conductive film, the opening ratio of the metal thin wire pattern is preferably 99% or less, more preferably 95% or less, still more preferably 90% or less, even still more preferably 80% or less, further even still more preferably 70% or less, and particularly preferably 60% or less. The proper value of the opening ratio of the metal thin wire pattern is also different depending on the shape of the metal thin wire pattern. In the case of a line pattern, an opening ratio of 68.4% or more is preferable, and in the case of a mesh pattern, an opening ratio of 46.8% or more is preferable. In addition, with respect to the opening ratio of the metal thin wire pattern, the above-described upper limit values and lower limit values can be appropriately combined according to the intended requisite performance (transparency and sheet resistance) of an electronic device.

It is to be noted that the "opening ratio of the metal thin wire pattern" can be calculated for a region on the transparent base material, the region having the metal thin wire pattern formed therein, by the following formula. The region on the transparent base material, the region having the metal thin wire formed therein, refers to the range shown as S in Figure 1, and marginal parts and the like where the metal thin wire pattern is not formed are excluded.

Opening ratio of metal thin wire pattern = (1 - area occupied by metal thin wire pattern/area of transparent base material) $\times$ 100

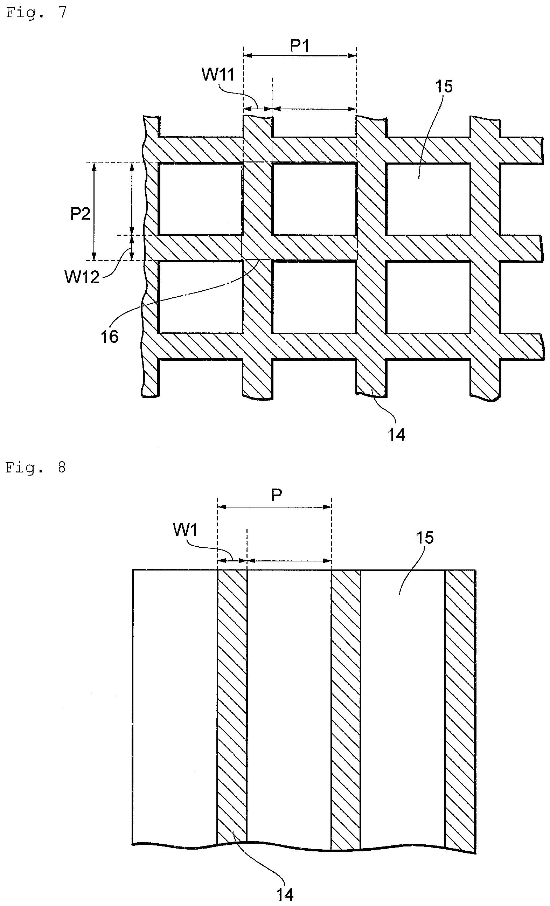

In addition, the relational formula between the opening ratio and the pitch depends on the shape of the thin wire pattern but can be calculated as follows. Figure 7 shows a schematic diagram of a mesh pattern (grid (lattice) pattern) having pattern units 16. In the case of this mesh pattern, the opening ratio and the pitch have the following relational formula.

$$\text{Opening ratio} = \{\text{area of opening part 15/area of pattern unit 16}\} \times 100$$
$$= \{(\text{pitch P1} - \text{front projection width W11}) \times (\text{pitch P2} - \text{front projection width W12})/\text{pitch P1} \times \text{pitch P2}\} \times 100$$

In addition, Figure 8 shows a schematic diagram of a line pattern. In the case of this line pattern, the opening ratio and the pitch have the following relational formula.

$$\text{Opening ratio} = ((\text{pitch P} - \text{front projection width W1})/\text{pitch P}) \times 100$$

(Sheet Resistance)

The sheet resistance of the electrically conductive film is preferably 0.1 to 1000 $\Omega$/sq, more preferably 0.1 to 500 $\Omega$/sq, still more preferably 0.1 to 100 $\Omega$/sq, even still more preferably 0.1 to 20 $\Omega$/sq, and further even still more preferably 0.1 to 10 $\Omega$/sq. The sheet resistance of the electrically conductive film can be measured by the method described in ASTM F390-11. There is a tendency that the lower the sheet resistance is, the more the power loss is suppressed. Therefore, an electronic paper, a touch panel, and a flat panel display with reduced power consumption can be obtained.

There is a tendency that the sheet resistance of the electrically conductive film is lowered by increasing the aspect ratio (height) of the metal thin wire. In addition, the sheet resistance of the electrically conductive film can also be adjusted by selecting the type of a metal material that constitutes the metal thin wire.

(Visible Light Transmittance)

The visible light transmittance of the electrically conductive film is preferably equal to or larger than the opening ratio of the metal thin wire pattern. Specifically, the visible light transmittance of the electrically conductive film is preferably 80 to 100%, more preferably 90 to 100%, and still more preferably 95 to 100%. The visible light transmittance herein can be measured by calculating the transmittance in a range of visible light (360 nm to 830 nm) in accordance with the total light transmittance in JIS K 7361-1:1997. In the present embodiment, as described above, the longest projection width W0 is smaller than the wavelengths of visible light, thereby making the visible light transmittance equal to or larger than the opening ratio of the metal thin wire pattern, so that it becomes hard for human eyes to visually recognize the thin wire, and thus the transmission properties are improved exceeding the limit of the opening ratio of the metal thin wire pattern.

There is a tendency that the visible light transmittance of the electrically conductive film is more improved by making the longest projection width W0 of the metal thin wire thinner or by increasing the opening ratio.

[Method for Producing Electrically Conductive Film]

A method for producing the electrically conductive film according to the present embodiment is not particularly limited, and examples thereof include a method having a step of transferring an ink containing a metal particle having an average primary particle diameter of 100 nm or less on a transparent base material using a plate having grooves for a desired metal thin wire pattern. More specifically, examples thereof include a method having: a step of coating a transfer medium with an ink; a step of allowing a surface of the transfer medium, the surface being coated with the ink, and a surface of protruded parts of a relief printing plate to face each other, and pressing the surfaces so as to be brought into contact with each other, thereby transporting the ink on the surface of the transfer medium to the surface of the protruded parts of the relief printing plate; and a step of allowing the surface of the transfer medium, the surface being coated with the ink, and a surface of a transparent base material (base material to be printed) to face each other, and pressing the surfaces, thereby transferring the ink left on the surface of the transfer medium to the surface of the transparent base material.

(Ink)

Components contained in the ink that can be used in the method for producing the electrically conductive film according to the present embodiment are not particularly limited, and the ink may contain a metal particle having an average primary particle diameter of 100 nm or less, the metal particle containing a metal component such as gold, silver, copper, or aluminum, and may further contain a surfactant, a dispersant, and a solvent. Besides, if necessary, the ink may contain a reducing agent or the like.

The average primary particle diameter of the metal particle is preferably 100 nm or less, more preferably 50 nm or less, and still more preferably 10 nm or less. In addition, the lower limit of the average primary particle diameter of the metal particle is not particularly limited, and examples thereof include 1 nm or more. When the average primary particle diameter of the metal particle is 100 nm or less, the longest projection width W0 of the resultant metal thin wire can be thereby made thinner. It is to be noted that the "average primary particle diameter" in the present embodiment refers to a particle diameter of individual metal particles (so called primary particles) and is distinguished from an average secondary particle diameter that refers to a particle diameter of aggregates (so called secondary particles) formed through gathering of a plurality of metal particles.

As long as it contains a metal component such as gold, silver, copper, or aluminum, the metal particle may be an oxide such as copper oxide or may be an aspect of a core/shell particle, such as the one in which the core part is copper, and the shell part is copper oxide. The aspect of the metal particle can be appropriately determined from the viewpoint of dispersibility or sintering properties.

The surfactant is not particularly limited, and examples thereof include fluorine-based surfactants and silicone-based surfactants. There is a tendency that when such surfactants are used, coatability of a transfer medium (blanket) with an ink and smoothness of coating ink are thereby improved, so that a more uniform coating film is obtained. It is to be noted that the surfactant is preferably constituted so as to be capable of dispersing the metal particle and so as to be hardly left during sintering.

In addition, the dispersant is not particularly limited, and examples thereof include a dispersant that forms a noncovalent bond at or interacts with the surface of the metal particle and a dispersant that forms a covalent bond at the surface of the metal particle. Examples of a functional group that forms a noncovalent bond or that interacts include a dispersant having a phosphoric acid group. There is a tendency that when such dispersants are used, the dispersibility of the metal particle is thereby more improved.

Furthermore, examples of the solvent include: alcohol-based solvents such as monoalcohols and polyhydric alcohols; alkyl ether-based solvents; hydrocarbon-based solvents; ketone-based solvents; and ester-based solvents. These may be used singly, or one or more of these may be used together. Examples include use of a monoalcohol having 10 or less carbon atoms and a polyhydric alcohol having 10 or less carbon atoms together. There is a tendency that when such solvents are used, coatability of a transfer medium (blanket) with an ink, transition properties of an ink from a transfer medium to a relief printing plate, transportation properties of an ink from a transfer material to a transparent base material, and dispersibility of a metal particle are thereby more improved. It is to be noted that the solvent is preferably constituted so as to be capable of dispersing a metal particle and so as to be hardly left during sintering.

The method for producing the electrically conductive film according to the present embodiment may further have, in addition to the above-described steps, a step of sintering the metal particle in the ink transferred to the surface of the transparent base material. Calcination is not particularly limited as long as it is a method that is capable of fusing the metal particles and forming a metal particle-sintered film (electrically conductive metal thin wire). Calcination may be performed, for example, in a calcination furnace, or may be performed using plasma, a heated catalyst, an ultraviolet ray, a vacuum ultraviolet ray, an electron beam, infrared lamp annealing, a flash lamp annealing, laser, or the like. In a case where the resultant sintered film is easily oxidized, heat treatment is preferably performed in a non-oxidizing atmosphere. In addition, in a case where an oxide is hardly reduced only by a reducing agent that can be contained in an ink, calcination is preferably performed in a reducing atmosphere.

The non-oxidizing atmosphere refers to an atmosphere not containing an oxidizing gas such as oxygen and includes an inert atmosphere and a reducing atmosphere. The inert atmosphere refers to an atmosphere filled with an inert gas such as, for example, argon, helium, neon, and nitrogen. In addition, the reducing atmosphere indicates an atmosphere in which a reducing gas such as hydrogen or carbon monoxide exists. A dispersion-applied film may be calcined after forming a closed system by filling a calcination furnace with these gases. In addition, a dispersion-applied film may also be calcined in a calcination furnace made into a flow system while these gases are allowed to flow therein. In a case where a dispersion-applied film is calcined in a non-oxidizing atmosphere, it is preferable that oxygen in a calcination furnace be removed to make a vacuum and replaced by a non-oxidizing gas. In addition, calcination may be performed in a pressurized atmosphere or a reduced atmosphere.

The calcination temperature is not particularly limited, but is preferably 20°C or more and 400°C or less, more preferably 50°C or more and 300°C or less, and still more preferably 80°C or more and 200°C or less. It is preferable that the calcination temperature be 400°C or less because a substrate having low heat resistance can be thereby used. In addition, it is preferable that the calcination temperature be 20°C or more because there is a tendency that the formation of a sintered film thereby progresses sufficiently to make the electrical conductivity favorable. It is to be noted that the resultant sintered film contains an electrically conductive component derived from a metal particle and besides, can contain a non-electrically conductive component according to the component used for an ink and the calcination temperature.

[Electronic Paper]

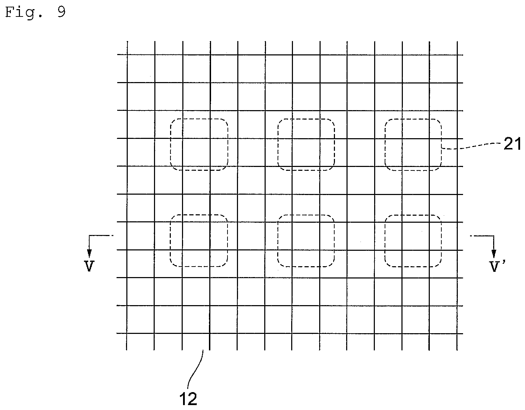

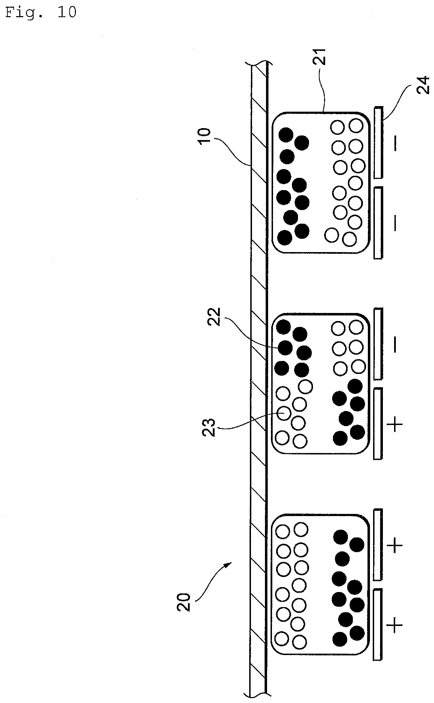

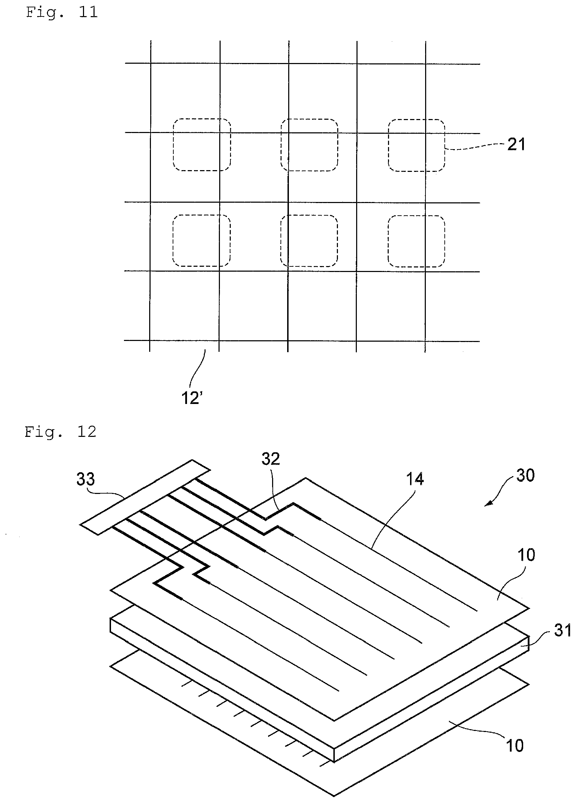

An electronic paper according to the present embodiment is not particularly limited as long as it is provided with the electrically conductive film. Figure 9 shows a top view illustrating one aspect of an electronic paper provided with an electrically conductive film (mesh pattern) according to the present embodiment, Figure 10 shows a partial sectional view of the electronic paper according to the present embodiment taken along V-V', and Figure 11 shows a top view illustrating one aspect of an electronic paper provided with a conventional, electrically conductive film having the same opening ratio as that in Figure 9 and having a metal thin wire the longest projection width W0 of which is thick.

As shown in Figure 9, an electronic paper 20 is constituted so that an electrical field can be applied to a cup 21 by disposing an electronic thin wire pattern 12 above the cup 21. Specifically, as shown in Figure 10, in the cup 21 of the electronic paper 20, a charged black pigment 22 and a charged white pigment 23 are accommodated, and the behavior of the charged black pigment 22 and of the charged white pigment 23 are controlled by the electrical field between a bottom electrode 24 and the electrically conductive film 10.

In this case, as shown by comparison between Figure 9 and Figure 11, the electronic paper having a finer metal thin wire pattern has a larger number of metal thin wires 14 that cross an area just above the cup 21 even though the opening ratio is the same, so that an electrical field can be applied to the cup 21 more uniformly. Accordingly, the electronic paper 20 provided with the electrically conductive film 10 according to the present embodiment can give a higher-resolution image. It is to be noted that the constitution of the electronic paper 20 according to the present embodiment is not limited to the constitution described above.

[Touch Panel]

A touch panel according to the present embodiment is not particularly limited as long as it is provided with the electrically conductive film. Figure 12 shows a perspective view illustrating one aspect of a touch panel provided with an electrically conductive film (line pattern) according to the present embodiment. In an electrostatic capacitance system touch panel 30, two sheets of electrically conductive films 10 exist at front and rear surfaces of an insulator 31, and the two sheets of electrically conductive films 10 face each other so that the line patterns cross each other. In addition, the electrically conductive film 10 may have a lead-out electrode 32. The lead-out electrode 32 connects the metal thin wire 14 to a controller 33 (such as CPU) for conducting electrification switching to the metal thin wire 14.

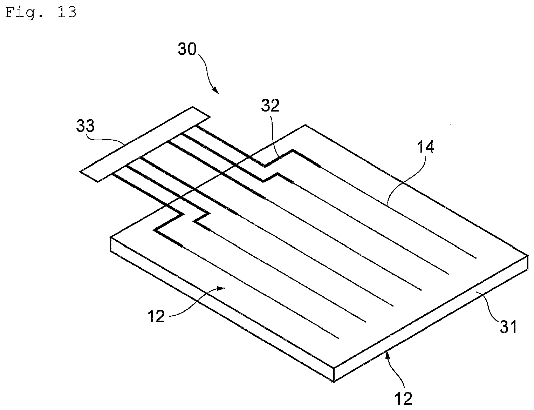

In addition, Figure 13 shows a perspective view illustrating another aspect of the touch panel provided with an electrically conductive film (line pattern) according to the present embodiment. This touch panel 30 is provided with a metal thin wire pattern 12 at front and rear surfaces of the electrically conductive film 10 according to the present embodiment instead of being provided with the two sheets of the electrically conductive film at front and rear surfaces of the insulator 31. Thereby, the touch panel is provided with two metal wire patterns 12 at front and rear surfaces of the insulator 31 (transparent base material 11).

It is to be noted that the touch panel according to the present embodiment is not limited to the electrostatic capacitance system, and a resistance film system, a projection type electrostatic capacitance system, a surface type electrostatic capacitance system, and the like may also be adopted.

[Flat Panel Display]

A flat panel display according the present embodiment is not particularly limited as long as it is provided with the electrically conductive film described above.

Industrial Applicability

The electrically conductive film according to the present invention has industrial applicability as a transparent electrode for an electronic paper, a touch panel, a flat panel display, and the like.

Reference Signs List

10    Electrically conductive film
11    Transparent base material
12    Metal thin wire pattern
13    Electrically conductive part
14    Metal thin wire
15    Opening part
16    Pattern unit
20    Electronic paper
21    Cup
22    Black pigment
23    White pigment
24    Bottom electrode
30    Touch panel
31    Insulator
32    Lead-out electrode
33    Controller

**Claims**

1.  An electrically conductive film having:

    a transparent base material; and
    an electrically conductive part comprising a metal thin wire pattern disposed on the transparent base material, wherein:

    the metal thin wire pattern is constituted of a metal thin wire; and
    when the metal thin wire is projected onto a plane, a projection width that is the longest among projection widths of the metal thin wire is less than a lower limit wavelength of visible light.

2.  The electrically conductive film according to claim 1, wherein
    the projection width of the metal thin wire is less than 360 nm.

3.  The electrically conductive film according to claim 1 or 2, wherein
    when a wire width of the metal thin wire, the wire width obtained by projecting the metal thin wire onto a surface of the transparent base material from a side of a face of the transparent base material, the face having the metal thin wire pattern disposed thereon, is defined as a front projection wire width,
    an aspect ratio represented by a height of the metal thin wire to the front projection wire width of the metal thin wire is 0.1 to 2.

4.  The electrically conductive film according to any one of claims 1 to 3, wherein
    a visible light transmittance of the electrically conductive film is equal to or larger than an opening ratio of the metal thin wire pattern.

5. The electrically conductive film according to any one of claims 1 to 4, wherein
a pitch of the metal thin wire pattern is larger than the sum of an upper limit wavelength of the visible light and a lower limit wavelength of the visible light.

6. The electrically conductive film according to any one of claims 1 to 5, wherein
an opening ratio of the metal thin wire pattern is 40 to 99%.

7. The electrically conductive film according to any one of claims 1 to 6, wherein
a visible light transmittance of the electrically conductive film is 80 to 100%.

8. The electrically conductive film according to any one of claims 1 to 7, wherein
a sheet resistance of the electrically conductive film is 0.1 to 1000 $\Omega$/sq.

9. The electrically conductive film according to any one of claims 1 to 8, wherein
the metal thin wire pattern is a mesh pattern.

10. The electrically conductive film according to any one of claims 1 to 8, wherein
the metal thin wire pattern is a line pattern.

11. The electrically conductive film according to any one of claims 1 to 10, wherein
the metal thin wire comprises an electrically conductive component and a non-electrically conductive component.

12. An electronic paper comprising:
the electrically conductive film according to any one of claims 1 to 11.

13. A touch panel comprising:
the electrically conductive film according to any one of claims 1 to 11.

14. A flat panel display comprising:
the electrically conductive film according to any one of claims 1 to 11.

Fig. 1

Fig. 2

Fig. 3

10

11

14

12

13

Fig. 4

10

11

14

12

13

Fig. 5

Fig. 6

Fig. 7

Fig. 8

Fig. 9

Fig. 10

Fig. 11

Fig. 12

Fig. 13

## INTERNATIONAL SEARCH REPORT

| International application No. |
| --- |
| PCT/JP2017/024004 |

### A. CLASSIFICATION OF SUBJECT MATTER

*H01B5/14*(2006.01)i, *B32B7/02*(2006.01)i, *B32B15/08*(2006.01)i, *G06F3/041* (2006.01)i, *G06F3/044*(2006.01)i

According to International Patent Classification (IPC) or to both national classification and IPC

### B. FIELDS SEARCHED

Minimum documentation searched (classification system followed by classification symbols)
H01B5/14, B32B7/02, B32B15/08, G06F3/041, G06F3/044

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2010-153698 A  (NISSHA Printing Co., Ltd.),<br>08 July 2010 (08.07.2010),<br>claims; paragraphs [0021], [0045], [0052] to<br>[0053]; examples<br>(Family: none) | 1-9,12-14<br>10,12-14<br>11 |
| X | JP 2006-294550 A  (Osaka Prefecture University),<br>26 October 2006 (26.10.2006),<br>claims; paragraphs [0018], [0022]; examples;<br>figures<br>(Family: none) | 1-14 |
| Y<br>A | JP 2013-180556 A  (Lintec Corp.),<br>12 September 2013 (12.09.2013),<br>paragraphs [0003], [0030]<br>& KR 10-2013-0101462 A  & CN 103310876 A<br>& TW 201337966 A | 10,12-14<br>1-9,11 |

☒ Further documents are listed in the continuation of Box C.        ☐ See patent family annex.

| | |
| --- | --- |
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>07 August 2017 (07.08.17) | Date of mailing of the international search report<br>15 August 2017 (15.08.17) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/024004

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-278845 A (Toppan Printing Co., Ltd.), 12 October 2006 (12.10.2006), claims (Family: none) | 1-14 |

Form PCT/ISA/210 (continuation of second sheet) (January 2015)